# EUROPEAN PATENT APPLICATION

(11) **EP 2 129 174 A2**
(43) Date of publication of application: **02.12.2009**
(21) Application number: 09158955.6
(22) Date of filing: 28.04.2009
(51) Int. Cl.: H04W 16/32

(54) **Wireless communication system, wireless terminal, management apparatus, and session control method**

(30) Priority: 28.05.2008 JP 2008139510
(71) Applicant: Nec Corporation, Tokyo 108-8001 (JP)
(72) Inventor: Morise, Kazuhiro, Tokyo 108-8001 (JP)
(74) Representative: Betten & Resch

(57) **Abstract**

A first base station apparatus time division multiplexes an upstream channel and a downstream channel at a first ratio into a first frequency, and uses the upstream channel and the downstream channel in a predetermined coverage to relay a communication of a wireless terminal. In a coverage overlapping the coverage of the first base station apparatus, a second base station apparatus time division multiplexes an upstream channel and a downstream channel at a second ratio which is different from the first ratio, into a second frequency which is different from the first frequency, and uses the upstream channel and the downstream channel to relay a communication of the wireless terminal.

## Description

This application is based upon and claims the benefit of priority from Japanese Patent Application No. 2008-139510 filed on May 28, 2008, the content of which is incorporated by reference.

### BACKGROUND OF THE INVENTION

### 1. Field of the Invention

The present invention relates to a wireless communication system in which an upstream signal and a downstream signal are time division multiplexed.

### 2. Description of the Related Art:

In some wireless communication systems, which cover a communication area with a cell formed by a wireless base station and which enable communication by a wireless terminal within the communication area, an upstream signal from the wireless terminal to the wireless base stations time division multiplexed, and a downstream signal form the wireless base station to the wireless terminal is time division multiplexed. For example, in WiMAX (Worldwide Interoperability for Microwave Access), the communication area is covered with a cell such as a macro cell, a micro cell or a femto cell, thereby enabling communications at various places. Then, the WiMAX includes a frame format in which the upstream signal and the downstream signal have been time division multiplexed.

Moreover, there are various applications that are used in the wireless terminal, and the band that is required for communication is different depending on each application.

Moreover, in some applications, the band required for an upstream channel may be different from the band required for a downstream channel.
For example, in an application in which a live video is shot by camera and uploaded to a server through a wireless terminal, a large band is required for the upstream channel. Moreover, in such an application in which IPTV (Internet Protocol Television) is viewed on the wireless terminal, a large band is required for the downstream channel.

Moreover, it is different for each user that which is more used the bands of the upstream channel or the downstream channel.

Consequently, in the wireless communication system as described above, it is required to efficiently accommodate the communications having various bandwidths.

Japanese Patent Laid-Open No. 10-303846 discloses a technique in which, in a transmission apparatus using a time division multiplex system and a time division multiple access system, the lengths of an upstream region and a downstream region in a burst cycle are set to be different from each other.

National Publication of International Patent Application No. 1999-501783 discloses a technique in which, in a mobile communication system including a combination of mobile communication network, a mobile communication network that is to be connected is selected based on its capacity, transmission speed, availability and the like.

However, the above described techniques include problems as shown below.

If a design including the different lengths of the upstream region and the downstream region as disclosed in Japanese Patent Laid-Open No. 10-303846 in order to efficiently accommodate the communication for any application is applied, the design is not suitable for an application in which a ratio of the upstream to the downstream is different from that of system design.

Moreover, in the case where, for each set of cells, as disclosed in Japanese Patent Laid-Open No. 10-303846, it is assumed that the lengths of the upstream region and the downstream region are set to be different from each other and a destination to which the wireless terminal is connected is selected based on the transmission speed and the like, if the ratio of the upstream to the downstream is different between adjacent cells including overlapping coverages or between overlapping cells, interference will occur between the cells. It is because, in the specifications of a wireless communication systems that use time division multiplex communication, generally, it is not supposed that the upstream signal and the downstream signal overlap each other temporally and spatially. Consequently, a cell design is required in which the ratios of the upstream band to the downstream band of the cells, including the overlapping coverages, are not different from each other, and this result in a cumbersome design.

### SUMMARY OF THE INVENTION

It is an object of the present invention to provide a wireless communication technique which enables communications that requires different bands to be efficiently accommodated, but without requiring any cumbersome design.

In order to achieve the above described object, a wireless communication system according to an exemplary aspect of the present invention includes:
a first base station apparatus which time division multiplexes an upstream channel and a downstream channel at a first ratio into a first frequency, and uses the above described upstream channel and the above described downstream channel in a predetermined coverage to relay the communication of a wireless terminal; and
a second base station apparatus which, in a coverage overlapping the coverage of the above described first base station apparatus, time division multiplexes an upstream channel and a downstream channel at a second ratio which is different from the above described first ratio, into a second frequency which is different from the above described first frequency, and uses the above described upstream channel and the above described downstream channel to relay a communication of the above described wireless terminal.

A wireless terminal according to an exemplary aspect of the present invention is a wireless terminal which selects any of the wireless base stations having different ratios of an upstream channel to a downstream channel, which are time division multiplexed, and which performs a communication, including:
application control means which starts an application and executes control of the started application;
base station selection means which obtains the ratios of the upstream channel to the downstream channel in base station apparatuses, which have been annunciated by the above described base station apparatuses, monitors service quality required for the communication in the above described application started by the application control means, and based on a monitoring result and the ratios in the above described base station apparatuses, selects a base station apparatus to be connected; and
connection processing means which establishes a session going through the base station apparatus selected by the base station selection means, and provides the established session to the above described application started by the application control means.

A management apparatus according to an exemplary aspect of the present invention is, in a wireless communication system in which a wireless terminal performs a communication at any of wireless base stations having different ratios of an upstream channel to a downstream channel, which are time division multiplexed, a management apparatus which determines a base station apparatus to which the above described wireless terminal is connected, including:
service quality management means which obtains service quality required for each communication of the wireless terminal which is relayed by the above described base station apparatus, and retains information indicating the above described service quality;
base station selection means which, depending on the above described service quality of each communication retained in the service quality management means, selects a base station apparatus to be gone through by a session of the above described communication; and
connection control means which controls the above described session so that the above described session goes through the base station apparatus selected by the above described base station selection means.

A session control method according to an exemplary aspect of the present invention is a session control method in a wireless communication system in which a wireless terminal performs a communication at any of wireless base stations having different ratios of an upstream channel to a downstream channel, which are time division multiplexed, the method including:
obtaining service quality required for each communication of the wireless terminal which is relayed by a base station apparatus;
depending on the above described obtained service quality of each communication, selecting a base station apparatus to be gone through by a session of the above described communication; and
controlling the above described session to go through the selected base station apparatus.

The above and other objects, features, and advantages of the present invention will become apparent from the following description with references to the accompanying drawings which illustrate examples of the present invention.

### BRIEF DESCRIPTION OF THE DRAWINGS

FIG. 1 is a block diagram showing a configuration of a wireless communication system of this exemplary embodiment;
FIG. 2 is a diagram showing an example of a cell configuration of the wireless communication system of this exemplary embodiment;
FIG. 3 is a block diagram showing a configuration of wireless terminal 16;
FIG. 4 is a block diagram showing the configuration of the wireless communication system in the case where a base station apparatus through which a session of a communication of wireless terminal 16 passes through is selected in a network-driven manner;
FIG. 5 is a block diagram showing a configuration of management apparatus 41;
FIG. 6 is a diagram showing frequency bands assigned to the wireless communication system; and
FIG. 7 is a diagram showing a frequency arrangement in this example.

### DETAILED DESCRIPTION OF THE PREFERRED EMBODIMENTS:

A configuration in which the present invention is implemented will be described in detail with reference to the drawings.

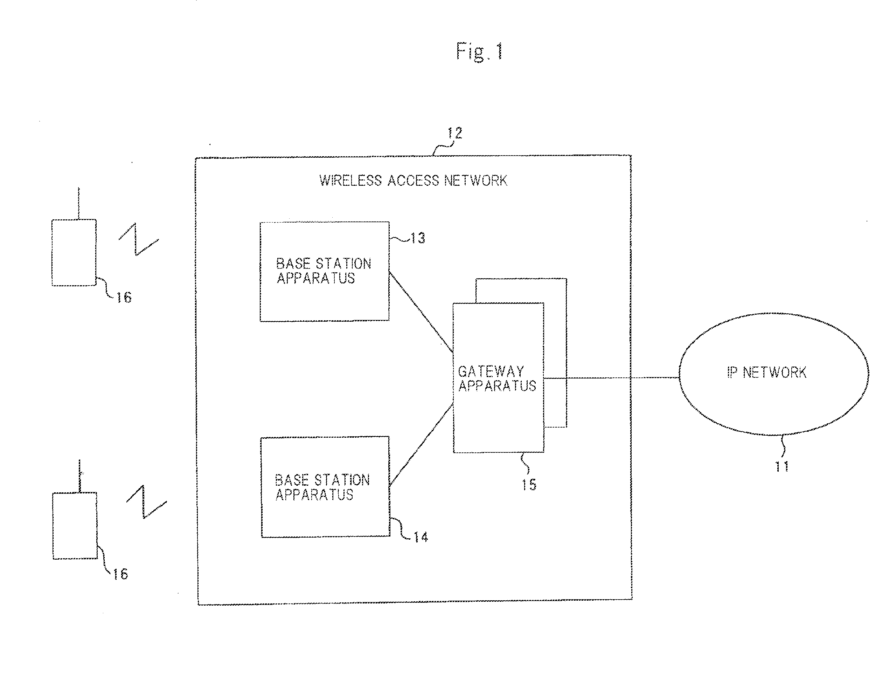

FIG. 1 is a block diagram showing a configuration of a wireless communication system of this exemplary embodiment. With reference to FIG. 1, the wireless communication system includes wireless access network 12 connected to IP (Internet Protocol) network 11. Wireless access network 12 includes base station apparatuses 13 and 14, and gateway apparatus 15.
Base station apparatuses 13 and 14 are connected to gateway apparatus 15.

Gateway apparatus 15 becomes a gateway which connects wireless access network 12 to IP network 11.

Each of base station apparatuses 13 and 14 further connects to wireless terminal 16 via a wireless line including an upstream channel and a downstream channel, and uses the upstream channel and the downstream channel to relay a communication of wireless terminal 16.

Each of base station apparatuses 13 and 14 time division multiplexes the upstream channel and the downstream channel at a predetermined ratio into a predetermined frequency, and relays the communication of wireless terminal 16 in a predetermined coverage.

The frequency of base station apparatus 13 and the frequency of base station apparatus 14 are different from each other. For example, it is enough that these frequencies just keep away from each other so that a mutual communication is not affected by interference.

Moreover, the ratio of the upstream channel to the downstream channel in base station apparatus 13 and the ratio of the upstream channel to the downstream channel in base station apparatus 14 are different from each other. For example, each ratio may be set to a ratio suitable for each of services provided via the wireless communication system.

Moreover, the coverage of base station apparatus 13 and the coverage of base station apparatus 14 overlap each other. Although it is applicable that coverages are at least partially overlap each other, in a typical example the coverages largely overlap each other.

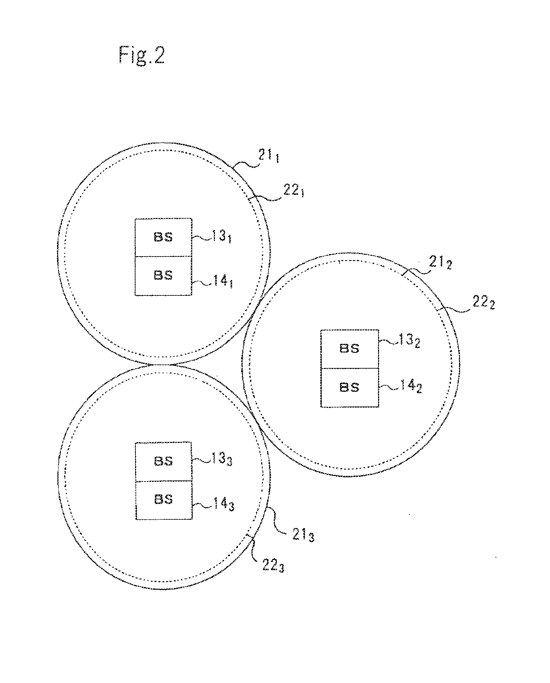

FIG. 2 is a diagram showing an example of a cell configuration of the wireless communication system of this exemplary embodiment. In FIG. 2, base station apparatuses (BS) 13₁ and 14₁ form cells at the frequencies different from each other, base station apparatuses 13₂ and 14₂ form cells at frequencies that are different from each other, and base station apparatuses 13₃ and 14₃ form cells at the frequencies that are different from each other.

Base station apparatus 13₁ forms cell 21₁, and base station apparatus 14₁ forms cell 22₁. Base station apparatus 13₂ forms cell 21₂, and base station apparatus 14₂ forms cell 22₂. Base station apparatus 13₃ forms cell 21₃, and base station apparatus 14₃ forms cell 22₃.

Cells 21₁ and 22₁ include the same coverage as each other, cells 21₂ and 22₂ include the same coverage as each other, and cells 21₃ and 22₃ include the same coverage as each other.

Moreover, cells 21₁, 21₂ and 21₃ include the ratio of the upstream channel to the downstream channel, which are time division multiplexed and equal to one another. Cells 22₁, 22₂ and 22₃ include the ratio of the upstream channel to the downstream channel, which are time division multiplexed and equal to one another. Then, the ratio in cells 21₁, 21₂ and 21₃ and the ratio in cells 22₁, 22₂ and 22₃ are different from each other.

Wireless terminal 16 is a terminal which uses a communication service to execute an application, and connects to IP network 11 via wireless access network 12 based on processing in the application. There are various applications used in wireless terminal 16, and a different band is required for the communication depending on a type of the application.

Wireless terminal 16 can connect to either base station apparatus 13 or base station apparatus 14. Which base station apparatus a session of the communication of wireless terminal 16 passes through is selected depending on wireless terminal 16, or depending on the application used in wireless terminal 16. Which base station apparatus the session of the communication of wireless terminal 16 passes through may be selected with leading by a network or may be selected with leading by wireless terminal 16. Alternatively, the selection in a network-driven manner and the selection in a manner driven by wireless terminal 16 may be concurrently used.

First, an example in which which base station apparatus the session of the communication of wireless terminal 16 passes through is selected with leading by wireless terminal 16 will be described.

Each of base station apparatuses 13 and 14 annunciates information indicating the ratio of the upstream channel to the downstream channel in its own wireless line, in a header of a frame of the wireless line. Thereby, wireless terminal 16 can know the ratio in each of base station apparatuses 13 and 14. This information is used to select the base station apparatus to which wireless terminal 16 connects.

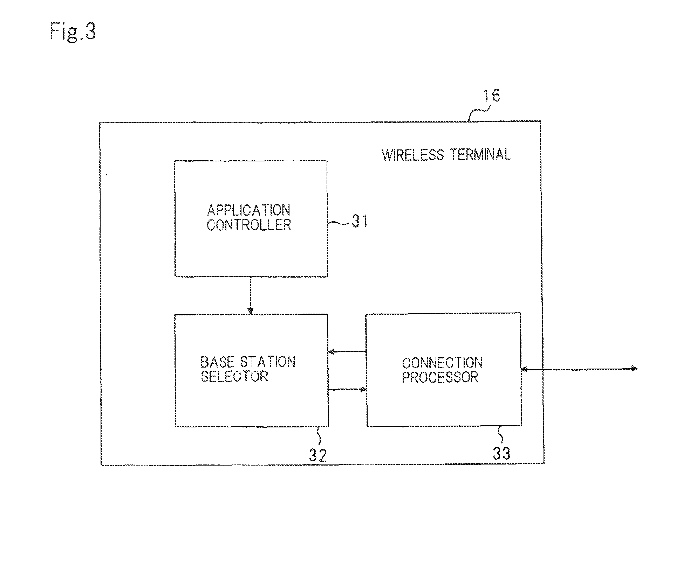

FIG. 3 is a block diagram showing a configuration of wireless terminal 16.
With reference to FIG. 3, wireless terminal 16 includes application controller 31, base station selector 32, and connection processor 33.

Application controller 31 starts an application at a user's request, and executes control of the started application.

Base station selector 32 obtains and retains the ratios of the upstream channel to the downstream channel in base station apparatuses 13 and 14, which have been annunciated by base station apparatuses 13 and 14, and also, monitors service quality required for the communication in the application started by application controller 31, and based on a monitoring result and the ratios in the respective base station apparatuses, selects the base station apparatus to be connected.

As the service quality, a band of an upstream signal and a band of a downstream signal have been specified. Base station selector 32 may select, for example, the base station apparatus including the ratio of the upstream channel to the downstream channel which is identical to the ratio of the band of the upstream signal to the band of the downstream signal, which have been defined in the service quality. Alternatively, base station selector 32 may select the base station apparatus including the ratio of the upstream channel to the downstream channel which is closer to the ratio of the band of the upstream signal to the band of the downstream signal, which have been specified by the service quality.

Connection processor 33 establishes a session that passes through the base station apparatus selected by base station selector 32, and provides the established session to the application started by application controller 31.

Next, an example that which base station apparatus the session of the communication of wireless terminal 16 passes through is selected in a network-driven manner will be described.

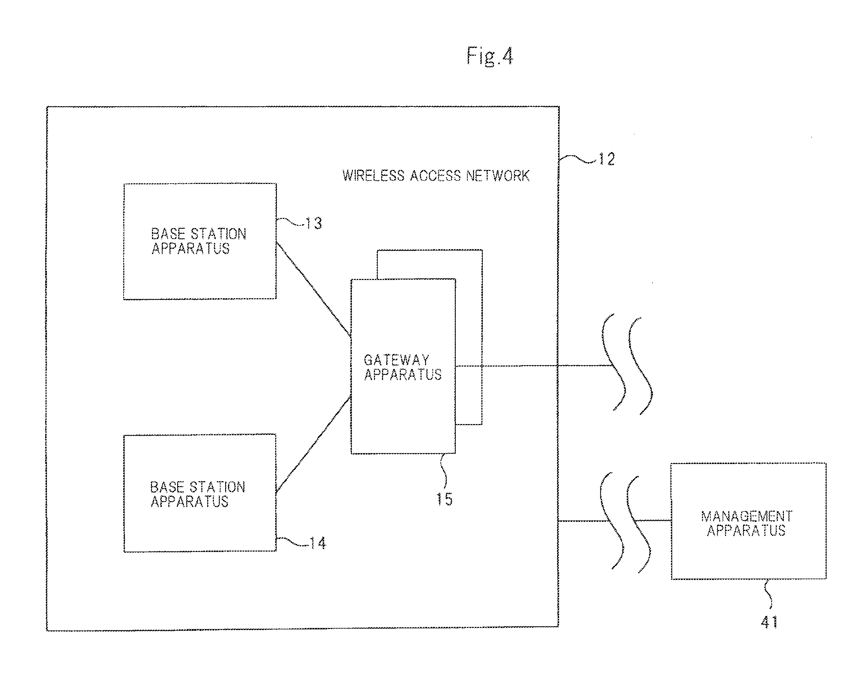

FIG. 4 is a block diagram showing the configuration of the wireless communication system in the case where which base station apparatus the session of the communication of wireless terminal 16 passes through is selected in a network-driven manner. With reference to FIG. 4, management apparatus 41 has been connected to wireless access network 12. Specifically, for example, management apparatus 41 may connect to base station apparatuses 13 and 14.

Management apparatus 41 manages the service quality required for each communication of wireless terminal 16 which is relayed by base station apparatuses 13 and 14, and depending on the service quality, selects the base station apparatus through which the session of the communication goes.

For example, when wireless terminal 16 has requested establishment of a session to a server (not shown), management apparatus 41 may select the base station apparatus through which the session passes. Moreover, when updating the service quality, management apparatus 41 may select the base station apparatus through which the session passes. Moreover, when setting the service quality of the communication of wireless terminal 16, or when updating the service quality, management apparatus 41 may select the base station apparatus through which the session passes.

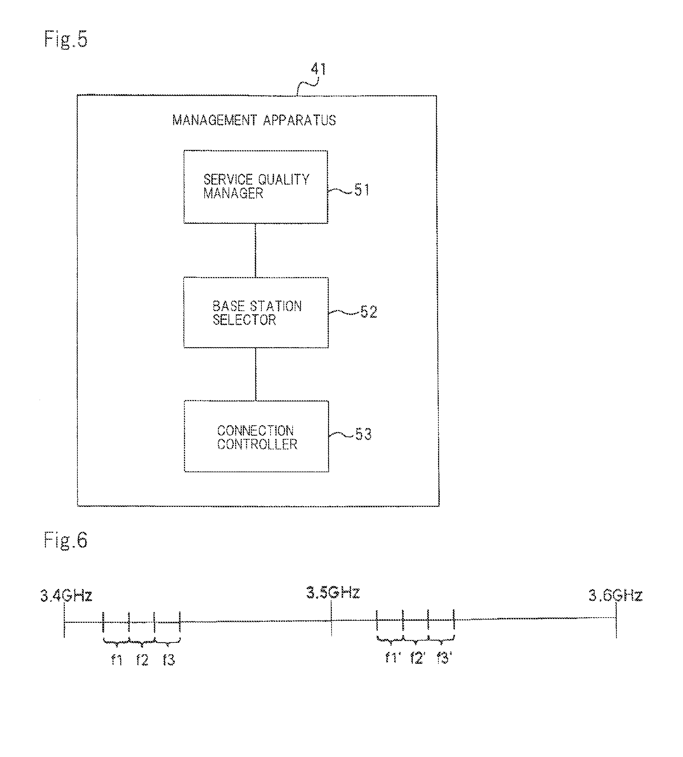

FIG. 5 is a block diagram showing a configuration of management apparatus 41. With reference to FIG. 5, management apparatus 41 includes service quality manager 51, base station selector 52, and connection controller 53.

Service quality manager 51 obtains the service quality required for each communication of wireless terminal 16 which is relayed by base station apparatuses 13 and 14, and retains information indicating the service quality.

Depending on the service quality of each communication retained in service quality manager 51, base station selector 52 selects the base station apparatus through which the session of each communication goes.

In the service quality, the band of the upstream signal and the band of the downstream signal have been specified. Base station selector 52 may select, for example, the base station apparatus including the ratio of the upstream channel to the downstream channel which is identical to the ratio of the band of the upstream signal to the band of the downstream signal, which have been specified in the service quality. Alternatively, base station selector 52 may select the base station apparatus including the ratio of the upstream channel to the downstream channel which is closer to the ratio of the band of the upstream signal to the band of the downstream signal, which have been specified in the service quality.

Moreover, for example, when wireless terminal 16 has requested the establishment of the session to the server (not shown), base station selector 52 may select the base station apparatus through which the session passes. Moreover, when the service quality is updated, base station selector 52 may select the base station apparatus through which the session passes.
Moreover, when the service quality of the communication of wireless terminal 16 is set, or when the service quality is updated, base station selector 52 may select the base station apparatus through which the session passes.

Connection controller 53 controls each session so that each session passes through the base station apparatus selected by base station selector 52.

For example, when wireless terminal 16 has requested the establishment of the session, connection controller 53 establishes the session that will pass through the selected base station apparatus.

Moreover, for example, when the service quality is updated, connection controller 53 may switch a route of the session that will pass through the base station apparatus selected by base station selector 52.

Moreover, for example, when the service quality of the communication of wireless terminal 16 is set, or when the service quality is updated, connection controller 53 may switch the route of the session to go through the base station apparatus selected by base station selector 52.

As described above, according to this exemplary embodiment, base station apparatuses 13 and 14 having the overlapping coverages use frequencies that are different from each other to time division multiplex the upstream signal and the downstream signal at ratios that are different from each other. Therefore, depending on the bands required for the upstream signal and the downstream signal, which base station apparatus the communication is connected to can be selected. Consequently, according to this exemplary embodiment, communications in various bands can be efficiently accommodated. Moreover, in the wireless communication system of this exemplary embodiment, there is no cumbersomeness of cell design in which ratios of an upstream band to a downstream band of the cells including the overlapping coverages are set not to be different from each other.

Next, a specific example of this exemplary embodiment will be described. In this example, each of base station apparatuses 13 and 14 to be placed at the same site includes a three-sector configuration.

FIG. 6 is a diagram showing frequency bands assigned to the wireless communication system. With reference to FIG. 6, two frequency bands which keep away from each other enough in order not to interfere with each other have been assigned to the wireless communication system. One frequency band includes frequencies f1, f2 and f3, and the other frequency band includes frequencies f1', f2' and f3'.

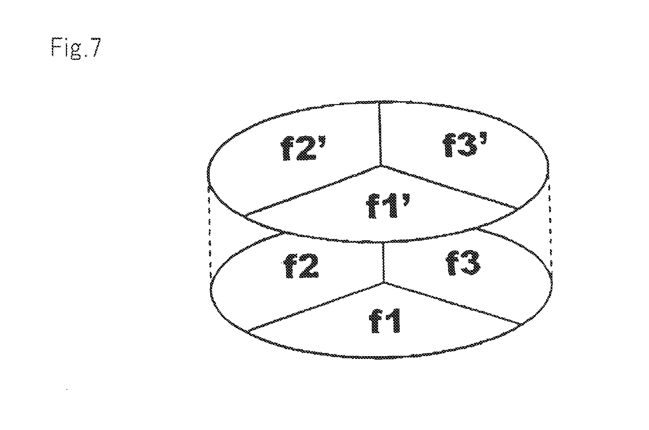

FIG. 7 is a diagram showing a frequency arrangement in this example.
In respective sectors of base station apparatus 13, frequencies f1, f2 and f3 are used respectively, and the upstream channel and the downstream channel are time division multiplexed into each frequency. In respective sectors of base station apparatus 14, frequencies f1', f2' and f3' are used respectively, and the upstream channel and the downstream channel are time division multiplexed into each frequency.

In this example, the coverage of the sector of frequency f1 of base station apparatus 13 and a coverage of the sector of frequency f1' of base station apparatus 14 are same. The coverage of the sector of frequency f2 of base station apparatus 13 and the coverage of the sector of frequency f2' of base station apparatus 14 are same. The coverage of the sector of frequency f3 of base station apparatus 13 and the coverage of the sector of frequency f3' of base station apparatus 14 are same. In base station apparatus 13 and base station apparatus 14, the ratios of the upstream channel to the downstream channel are different from each other. However, since the frequencies are sufficiently different from one another, any effects from interference are avoided.

Note that, in this exemplary embodiment, for easy understanding, base station apparatus 13 and base station apparatus 14 have been described as separate apparatuses. However, the present invention is not limited to a configuration in which base station apparatus 13 and base station apparatus 14 are physically separated. In physically one apparatus, base station apparatus 13 and base station apparatus 14 may be logically configured. For example, physically one base station apparatus capable of accommodating six sectors may be logically divided into two, and the respective divided portions may be caused to operate as base station apparatuses 13 and 14 including the three-sector configuration.

Although the exemplary embodiments of the present invention have been described above, the present invention is not limited to these exemplary embodiments, and within the range of the technical ideas of the present invention, these exemplary embodiments may be used in combination, or a part of the configuration may be altered.

While preferred exemplary embodiments of the present invention have been described using specific terms, such description is for illustrative purposes only, and it is to be understood that changes and variations may be made without departing from the spirit or scope of the following claims.

## Claims

1. A wireless communication system, comprising:
a first base station apparatus which time division multiplexes an upstream channel and a downstream channel at a first ratio into a first frequency, and which uses said upstream channel and said downstream channel in a predetermined coverage to relay a communication of a wireless terminal; and
a second base station apparatus which, in a coverage overlapping the coverage of said first base station apparatus, time division multiplexes an upstream channel and a downstream channel at a second ratio which is different from said first ratio, into a second frequency which is different from said first frequency, and which uses said upstream channel and said downstream channel to relay a communication of said wireless terminal.

2. The wireless communication system according to claim 1, wherein said first base station apparatus annunciates first information indicating said first ratio in a header of a frame of a wireless line, and said second base station apparatus annunciates second information indicating said second ratio in a header of a frame of a wireless line.

3. The wireless communication system according to claim 2, wherein said first information and said second information are used to select a base station apparatus to which said wireless terminal connects.

4. The wireless communication system according to one of claims 1 to 3, further comprising a management apparatus which monitors service quality required for the communication relayed by said first base station apparatus or said second base station apparatus, and depending on said service quality, selects a base station apparatus through which a session of said communication passes.

5. The wireless communication system according to one of claims 1 to 4, wherein when said wireless terminal has requested establishment of the session, said management apparatus selects the base station apparatus through which said session passes.

6. The wireless communication system according to one of claims 1 to 5, wherein when setting the service quality of the communication of said wireless terminal, or when updating said service quality, said management apparatus selects the base station apparatus through which said session passes.

7. The wireless communication system according to one of claims 1 to 6, wherein said first frequency and said second frequency are separated from each other so that the communication relayed by said first base station apparatus and the communication relayed by said second base station apparatus are not affected by an interference with each other.

8. A wireless terminal which selects any of the wireless base stations having different ratios of an upstream channel to a downstream channel, which are time division multiplexed, and performs a communication, comprising:
application control means which starts an application and implements control of the started application;
base station selection means which obtains the ratios of the upstream channel to the downstream channel in base station apparatuses, and which have been annunciated by said base station apparatuses, monitors service quality required for the communication in said application started by the application control means, and based on the monitoring result and the ratios in said base station apparatuses, selects a base station apparatus to be connected; and
connection processing means which establishes a session that passes through the base station apparatus selected by the base station selection means, and provides the established session to said application started by the application control means.

9. The wireless terminal according to claim 8, wherein:
in said service quality, a band of an upstream signal and a band of a downstream signal have been specified; and
said base station selection means selects a base station apparatus having the ratio of the upstream channel to the downstream channel which is identical to a ratio of the band of the upstream signal to the band of the downstream signal specified in said service quality or which is closer to said ratio.

10. In a wireless communication system in which a wireless terminal performs a communication at any of wireless base stations having different ratios of an upstream channel to a downstream channel which are time division multiplexed, a management apparatus which determines a base station apparatus to which said wireless terminal is connected, comprising:
service quality management means which obtains service quality required for each communication of the wireless terminal relayed by said base station apparatus, and which retains information indicating said service quality;
base station selection means which, depending on said service quality of each communication retained in the service quality management means, selects a base station apparatus through which a session of said communication is to pass; and
connection control means which controls said session so that said session passes through the base station apparatus selected by said base station selection means.

11. The management apparatus according to claim 10, wherein:
in said service quality, a band of an upstream signal and a band of a downstream signal have been specified; and
said base station selection means selects a base station apparatus having the ratio of the upstream channel to the downstream channel which is identical to a ratio of the band of the upstream signal to the band of the downstream signal specified in said service quality, or which is closer to said ratio.

12. The management apparatus according to claim 10 or 11, wherein when said wireless terminal has requested establishment of the session, said base station selection means selects the base station apparatus through which said session passes, and said connection control means establishes the session that passes through said base station apparatus selected by said base station selection means.

13. The management apparatus according to one of claims 10 to 12, wherein when said service quality is updated, said base station selection means selects the base station apparatus through which said session passes, and said connection control means switches a route of said session to pass through said base station apparatus selected by said base station selection means.

14. The management apparatus according to one of claims 10 to 13, wherein when said service quality of said wireless terminal is set, or when said service quality is updated, said base station selection means selects the base station apparatus through which said session goes, and said connection control means switches a route of said session to go through said base station apparatus selected by said base station selection means.

15. A session control method in a wireless communication system in which a wireless terminal performs a communication at any of the wireless base stations having different ratios of an upstream channel to a downstream channel which are time division multiplexed, the method comprising:
obtaining service quality required for each communication of the wireless terminal which is relayed by a base station apparatus;
depending on said obtained service quality of each communication, selecting a base station apparatus to be passed through by a session of said communication; and
controlling said session to go through the selected base station apparatus.
